(19) 

Europäisches
Patentamt

European
Patent Office

Office européen
des brevets

(11)     **EP 4 506 408 A1**

(12)                                       **EUROPEAN PATENT APPLICATION**
                                          published in accordance with Art. 153(4) EPC

(43) Date of publication:
**12.02.2025  Bulletin 2025/07**

(21) Application number: **23780485.1**

(22) Date of filing: **28.03.2023**

(51) International Patent Classification (IPC):
**C08L 23/06** (2006.01)      **C08L 23/08** (2025.01)
**F16L 11/04** (2006.01)

(52) Cooperative Patent Classification (CPC):
**C08L 23/06; C08L 23/08; F16L 11/04**

(86) International application number:
**PCT/JP2023/012436**

(87) International publication number:
**WO 2023/190476 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022  JP 2022056334**

(71) Applicant: **Mitsui Chemicals, Inc.**
**Tokyo 104-0028 (JP)**

(72) Inventors:
• **TSUCHIYA Hiroko**
  **Tokyo 104-0028 (JP)**

• **INOUE Kensei**
  **Ichihara-shi, Chiba 299-0108 (JP)**
• **KARINO Takeshi**
  **Ichihara-shi, Chiba 299-0108 (JP)**
• **UEHARA Hiroshi**
  **Tokyo 104-0028 (JP)**
• **OHSHIMIZU Kaoru**
  **Tokyo 104-0028 (JP)**
• **KUNIEDA Hiroshi**
  **Ichihara-shi, Chiba 299-0108 (JP)**
• **YOSHIDA Fumiya**
  **Kuga-gun, Yamaguchi 740-0061 (JP)**

(74) Representative: **J A Kemp LLP**
**80 Turnmill Street**
**London EC1M 5QU (GB)**

(54)     **ETHYLENE-BASED POLYMER COMPOSITION AND PIPE COMPRISING SAME**

(57)     An object of the present invention is to obtain an ethylene-based polymer composition suitable for polyethylene pipes that satisfy the performance of PE112 (having MRS of 11.2 MPa or higher) requiring higher creep strength, as well as excellent moldability and low sagging properties. The present invention relates to an ethylene-based polymer composition containing: 40 to 60 mass% of an ethylene homopolymer (A) having MFR measured at a temperature of 190°C under a load of 2.16 kg ($MFR_2$) within a range of 100 to 600 g/10 min; and 60 to 40 mass% of a copolymer (B) of ethylene and an $\alpha$-olefin having four or more carbon atoms [ethylene/$\alpha$-olefin copolymer (B)] [provided that a total amount of (A) + (B) is 100 mass%], in which the following requirements (i) to (iii) are satisfied.
(i) A density is within a range of 940 to 960 kg/m$^3$.
(ii) An amount of a component with GPC-measured log M $\geq$ 7 is within a range of 0.35 to 0.80%.
(iii) An amount of a component with GPC-measured log M $\leq$ 3 is 1.85% or less.

EP 4 506 408 A1

**Description**

Technical Field

The present invention relates to an ethylene-based polymer composition suitable for obtaining an extrusion molded body, such as a pipe, having excellent moldability and superior long-term performance and a pipe composed of the same.

Background Art

Ethylene-based polymers are molded by a variety of molding methods and served in diverse uses. For example, it is known that high-pressure low-density polyethylene polymerized by a high-pressure radical polymerization method has a long chain branch and is excellent in terms of workability. It is known that linear low-density ethylene/$\alpha$-olefin copolymers obtained by polymerizing ethylene and an $\alpha$-olefin using a Ziegler-Natta-based catalyst are excellent in terms of mechanical strengths such as tensile strength, tear strength and impact resistance and long-term durability represented by environmental stress cracking (ESCR), the hot internal pressure creep characteristics of pipes, slow crack growth (SCG) and the like. It is known that linear low-density ethylene/$\alpha$-olefin copolymers obtained by polymerizing ethylene and an $\alpha$-olefin using a metallocene-based catalyst are extremely excellent in terms of impact strength and ESCR. High-density polyethylene is obtained by copolymerizing ethylene alone or ethylene and an $\alpha$-olefin using a Ziegler-Natta-based catalyst, a chromium-based catalyst, a metallocene-based catalyst or the like and is known to be excellent in terms of rigidity or heat resistance.

In addition, since it is not possible to satisfy physical properties that are required depending on uses with ethylene-based polymers alone, a number of methods for mixing two kinds of ethylene-based polymers having different MFRs, densities or the like have been proposed (for example, Patent Literature 1 to 3).

Citation List

Patent Literature

> Patent Literature 1: JP2007-218324A
> Patent Literature 2: EP3293208
> Patent Literature 3: JP2003-531233A

Summary of Invention

Technical Problem

Conventionally, the characteristics of polyethylene pipes have been sufficient in many cases, but there is a demand for higher pressure-resistant performance in uses where higher pressure resistance is required, for example, pipes to which an internal fluid pressure is applied for a long period of time and/or a short period of time. At the moment, it is common that MRS is obtained from the classification table of ISO 12162 based on the lower confidence limit of the predicted hydrostatic strength obtained according to ISO 9080 and the allowable design stress for a given material is PE100 (MRS 10.0 MPa).

An object of the present invention is to obtain an ethylene-based polymer composition suitable for polyethylene pipes that satisfy the performance of equal to or higher than PE112 (having MRS of 11.2 MPa or higher and lower than 12.5 MPa) requiring higher creep strength, for example, PE125 (having MRS of 12.5 MPa or higher and lower than 14.0 MPa), as well as excellent moldability and low sagging properties.

Solution to Problem

The present invention relates to the following [1] to [12].

[1] An ethylene-based polymer composition comprising: 40 to 60 mass% of an ethylene homopolymer (A) having MFR measured at a temperature of 190°C under a load of 2.16 kg (MFR$_2$) within a range of 100 to 600 g/10 min; and 60 to 40 mass% of a copolymer (B) of ethylene and an $\alpha$-olefin having four or more carbon atoms [ethylene/$\alpha$-olefin copolymer

(B)] [provided that a total amount of (A) + (B) is 100 mass%], wherein the following requirements (i) to (iii) are satisfied.

(i) A density is within a range of 940 to 960 $kg/m^3$.
(ii) An amount of a component with GPC-measured log M $\geq$ 7 is within a range of 0.35 to 0.80%.
(iii) An amount of a component with GPC-measured log M $\leq$ 3 is 1.85% or less.

[2] The ethylene-based polymer composition according to item [1], wherein the $\alpha$-olefin having four or more carbon atoms is 1-butene or 1-hexene.

[3] The ethylene-based polymer composition according to item [1] or [2], wherein the ethylene/$\alpha$-olefin copolymer (B) has an intrinsic viscosity [$\eta$] within a range of 7.0 to 14.0 dl/g.

[4] The ethylene-based polymer composition according to any one of items [1] to [3], wherein the ethylene-based polymer composition has MFR measured at a temperature of 190°C under a load of 5 kg ($MFR_5$) within a range of 0.03 to 0.3 g/10 min.

[5] The ethylene-based polymer composition according to any one of items [1] to [4], wherein the ethylene-based polymer composition has a molecular weight distribution (Mw/Mn) measured by GPC within a range of 30 to 70.

[6] The ethylene-based polymer composition according to any one of items [1] to [5], wherein the ethylene homopolymer (A) and the ethylene/$\alpha$-olefin copolymer (B) have been polymerized using a Ziegler-Natta-based catalyst.

[7] A pipe, composed of the ethylene-based polymer composition according to any one of items [1] to [6].

[8] The pipe according to item [7], wherein the following (a) to (d) are satisfied at the same time in a hot internal pressure creep test measured according to ISO 1167.

(a) A failure time at a testing temperature of 20°C and a testing circumferential stress of 12.7 MPa is 500 hours or longer,
(b) a failure time at a testing temperature of 80°C and a testing circumferential stress of 6.3 MPa is 100 hours or longer,
(c) a failure time at a testing temperature of 80°C and a testing circumferential stress of 6.1 MPa is 1,000 hours or longer, and
(d) a failure time at a testing temperature of 80°C and a testing circumferential stress of 5.7 MPa is 3,000 hours or longer.

[9] The pipe according to item [7] or [8], wherein the pipe is formed by adding 0.01 to 3 parts by mass of one or more pigments selected from titanium oxide, titanium yellow, phthalocyanine blue, isoindolinone, a quinacridone compound, a condensed azo compound, ultramarine and cobalt blue with respect to 100 parts by mass of the ethylene-based polymer composition.

[10] An ethylene-based polymer composition composed of an ethylene homopolymer and a copolymer of ethylene and an $\alpha$-olefin having four or more carbon atoms, wherein the following requirements (i) to (vi) are satisfied.

(i) A density is within a range of 940 to 960 $kg/m^3$.
(ii) An amount of a component with GPC-measured log M $\geq$ 7 is within a range of 0.35% to 0.80%.
(iii) An amount of a component with GPC-measured log M $\leq$ 3 is 1.85% or less.
(iv) MFR measured at a temperature of 190°C under a load of 5 kg ($MFR_5$) is within a range of 0.03 to 0.3 g/10 min.
(v) A molecular weight distribution (Mw/Mn) measured by GPC is within a range of 30 to 70.
(vi) A pipe to be obtained satisfies the following (a) to (d) at the same time in a hot internal pressure creep test measured according to ISO 1167.

(a) A failure time at a testing temperature of 20°C and a testing circumferential stress of 12.7 MPa is 500 hours or longer,
(b) a failure time at a testing temperature of 80°C and a testing circumferential stress of 6.3 MPa is 100 hours or longer,
(c) a failure time at a testing temperature of 80°C and a testing circumferential stress of 6.1 MPa is 1,000 hours or longer, and
(d) a failure time at a testing temperature of 80°C and a testing circumferential stress of 5.7 MPa is 3,000 hours or longer.

[11] The ethylene-based polymer composition according to item [10], wherein the following requirement (vii) is further satisfied.
(vii) A chart measured by GPC is bimodal, and a content ratio between a low-molecular weight-side component and a

high-molecular weight-side component by peak separation is within a range of 40:60 to 60:40.

[12] The ethylene-based polymer composition according to item [11], wherein the low-molecular weight-side component is composed of an ethylene homopolymer, and the high-molecular weight-side component is composed of a copolymer of ethylene and an $\alpha$-olefin having four or more carbon atoms.

Advantageous Effects of Invention

The ethylene-based polymer composition of the present invention is excellent in terms of the long-term creep strength and the moldability of pipes, and the pipe in which the ethylene-based polymer composition according to the present invention is used has performance of MRS, which is classified based on ISO 9080 and 12162, being 11.2 MPa or higher (PE112) due to the excellent long-term creep strength. The ethylene-based polymer composition has appropriate fluidity and thus has excellent moldability and low sagging properties without impairing extrudability during molding.

The pipe composed of the ethylene-based polymer composition of the present invention is suitable for water pipes, gas pipes and the like.

Description of Embodiments

Hereinafter, a specific embodiment of the present invention will be described in detail, but the present invention is not limited by the following embodiment by any means and can be carried out after being appropriately modified within the scope of the object of the present invention. In the present specification, the term "polymer" is used to mean homopolymer and copolymer unless particularly otherwise described.

<Ethylene Homopolymer (A)>

An ethylene homopolymer (A) that is one component constituting the ethylene-based polymer composition of the present invention [hereinafter, referred to as "component (A)" or "homopolymer (A)" in some cases] has MFR measured at a temperature of 190°C under a load of 2.16 kg ($MFR_2$) within a range of preferably 100 to 600 g/10 min and more preferably 200 to 500 g/10 min and is preferably a homopolymer of ethylene polymerized using a Ziegler-Natta-based catalyst.

The component (A) relating to the present invention may contain a constitutional unit derived from at least one biomass-derived monomer (ethylene). Ethylene of the same kind that constitutes the component (A) may be biomass-derived ethylene alone or both biomass-derived ethylene and fossil fuel-derived ethylene may be contained. The biomass-derived ethylene is ethylene obtained using any renewable natural raw material that is derived from a plant, an animal or the like, including fungi, yeast, algae and bacteria, and a residue thereof as a raw material, contains a $^{14}C$ isotope as carbon in a proportion of approximately $10^{-12}$ and has a biomass carbon concentration (pMC) measured according to ASTM D 6866 of approximately 100 (pMC). The biomass-derived ethylene can be obtained by a conventionally well-known method.

The fact that the component (A) relating to the present invention contains the biomass-derived ethylene is preferable from the viewpoint of environmental load reduction.

When $MFR_2$ of the component (A) relating to the present invention satisfies the above-described range, the shear viscosity of the ethylene-based polymer composition containing the component (A) does not become too high, the resin pressure in an extruder decreases, and the moldability becomes favorable. In addition, a low-molecular weight component does not become too much, and the short-term creep strength thus becomes favorable.

$MFR_2$ of the component (A) relating to the present invention was measured according to JIS K 7210-1.

The intrinsic viscosity [$\eta$] of the component (A) relating to the present invention measured in a decalin solvent at 135°C is within a range of preferably 0.55 to 0.75 dl/g and more preferably 0.58 to 0.72 dl/g. When the intrinsic viscosity [$\eta$] is within the above-described range, the shear viscosity of the ethylene-based polymer composition containing the component (A) does not become too high, the resin pressure in an extruder decreases, and the moldability becomes favorable. In addition, the low-molecular weight component does not become too much, and the short-term creep strength thus becomes favorable.

The density of the component (A) relating to the present invention is preferably 960 kg/m$^3$ or higher and more preferably 965 kg/m$^3$ or higher. The density is within a range of more preferably 963 to 973 kg/m$^3$ and still more preferably 965 to 971 kg/m$^3$. When the density of the component (A) is within such a range, it becomes easy to put the density of the ethylene-based polymer composition containing the component (A) into a range where the following requirement (i) is satisfied.

The molecular weight distribution (Mw/Mn) measured by GPC of the component (A) relating to the present invention is also within a range of preferably 3.0 to 7.0 and more preferably 4.0 to 6.0. The molecular weight distribution (Mw/Mn) of the component (A) can be obtained by a method by the GPC peak separation of the ethylene-based polymer composition, which will be described below. Alternatively, the molecular weight distribution can be obtained by GPC measurement after the component (A) is collected in the production step of the ethylene-based polymer composition.

<Ethylene-$\alpha$-Olefin Copolymer (B)>

The ethylene/$\alpha$-olefin copolymer (B) that is one component constituting the ethylene-based polymer composition of the present invention [hereinafter, referred to as "component (B)" in some cases] is a copolymer of ethylene having an intrinsic viscosity [$\eta$] measured in a decalin solvent at 135°C within a range of preferably 7.0 to 14 dl/g and more preferably 8.0 to 12 dl/g and an $\alpha$-olefin having four or more carbon atoms. The number of carbon atoms in the $\alpha$-olefin having four or more carbon atoms is preferably 20 or less. The density of the component (B) is within a range of preferably 920 to 945 kg/m$^3$, more preferably 925 to 940 kg/m$^3$ and particularly preferably 930 to 935 kg/m$^3$. In addition, the molecular weight distribution (Mw/Mn) measured by GPC is within a range of preferably 4.0 to 8.0 and more preferably 5.0 to 7.0. The molecular weight distribution (Mw/Mn) of the component (B) can be normally obtained by the method by the GPC peak separation of the ethylene-based polymer composition, which will be described below. Alternatively, in a case where only the component (B) can be collected in the production step of the ethylene-based polymer composition, the molecular weight distribution can be obtained by the GPC measurement of the component (B).

When the intrinsic viscosity [$\eta$] of the component (B) is within the above-described range, the creep strength of the ethylene-based polymer composition containing the component (B) becomes favorable.

As the $\alpha$-olefin having four or more carbon atoms that constitutes the component (B) relating to the present invention, a plurality of $\alpha$-olefins may be used, and specific examples thereof include 1-butene, 1-pentene, 1-hexene, 4-methyl-1-pentene, 1-heptene, 1-octene, 1-decene and the like. Among these $\alpha$-olefins, 1-butene or 1-hexene is preferable, and 1-butene is more preferable. 1-butene is more preferable in terms of the production cost, and 1-hexene is more preferable in terms of the creep strengths of an ethylene-based polymer composition and a molded body to be obtained.

The component (B) relating to the present invention may contain at least one biomass-derived ethylene and/or a biomass-derived $\alpha$-olefin. Ethylene and/or $\alpha$-olefins of the same kind that constitute the component (B) may be biomass-derived ethylene and/or biomass-derived $\alpha$-olefins alone or both biomass-derived ethylene and/or a biomass-derived $\alpha$-olefin and a fossil fuel-derived $\alpha$-olefin and/or a fossil fuel-derived ethylene may be contained. The biomass-derived ethylene and the biomass-derived $\alpha$-olefin are ethylene and an $\alpha$-olefin obtained using any renewable natural raw material that is derived from a plant, an animal or the like, including fungi, yeast, algae and bacteria, and a residue thereof as a raw material, contain a $^{14}$C isotope as carbon in a proportion of approximately $10^{-12}$ and have a biomass carbon concentration (pMC) measured according to ASTM D 6866 of approximately 100 (pMC). The biomass-derived ethylene and the biomass-derived $\alpha$-olefin can be obtained by a conventionally well-known method.

The fact that the component (B) relating to the present invention contains the biomass-derived ethylene and/or $\alpha$-olefin is preferable from the viewpoint of environmental load reduction.

The density of the component (B) relating to the present invention is within a range of preferably 910 to 960 kg/m$^3$ and more preferably 922 to 948 kg/m$^3$. When the density of the component (B) is within such a range, it becomes easy to put the density of the ethylene-based polymer composition containing the component (B) into a range where the following requirement (i) is satisfied.

As long as the component (B) relating to the present invention has the above-described characteristics, a production method thereof is not particularly limited, but a polymer polymerized using a multisite catalyst has a wide molecular weight distribution and brings about moldabilty improvement, which is preferable.

Here, the multisite catalyst refers to a catalyst having a large number of conventionally well-known active points and is, for example, a Ziegler-Natta catalyst [hereinafter, referred to as "Ziegler catalyst" in some cases], a chromium-based catalyst (Phillips catalyst) or a standard catalyst, and, among these, the Ziegler catalyst is preferable.

<<Ethylene-Based Polymer Composition>>

The ethylene-based polymer composition of the present invention {hereinafter, referred to as "polymer composition" in some cases} is an ethylene-based polymer composition of 40 to 60 mass%, preferably 45 to 58 mass% and more preferably 50 to 56 mass% of the component (A) and 60 to 40 mass%, preferably 55 to 42 mass% and more preferably 50 to 44 mass% of the component (B) [provided that the total amount of (A) + (B) is 100 mass%], in which the following requirements (i) to (iii) are satisfied.

<Requirement (i)>

The density is within a range of 940 to 960 kg/m$^3$, preferably 945 to 958 kg/m$^3$ and more preferably 948 to 956 kg/m$^3$.

When the polymer composition satisfies the above-described range, the long-term creep strength becomes favorable.

<Requirement (ii)>

The amount of a component with GPC-measured $\log M \geq 7$ is within a range of 0.35% to 0.80%, preferably 0.38 to 0.75% and more preferably 0.40 to 0.70%.

The polymer composition satisfying such a requirement (ii) can be obtained by making the amounts of the component (A) and the component (B) that are contained in the polymer composition be within the above-described ranges. In addition, the amount of the component with $\log M \geq 7$ can be controlled to increase by adjusting the magnitude of the intrinsic viscosity $[\eta]$ of the component (B) to increase. Furthermore, in the ethylene-based polymer composition, there is a tendency that the amount of the component with $\log M \geq 7$ increases as the value of Mz, which will be described below, increases.

When the polymer composition satisfies the above-described range, the shear viscosity does not become too high, and the long-term creep strength becomes favorable. When the amount of the component with $\log M \geq 7$ is too large, the shear viscosity of the polymer composition becomes too high, and there is a concern that the resin pressure in an extruder may increase and the moldability may deteriorate. In addition, there is a concern that the appearance of a pipe made of the polymer composition may deteriorate. When the amount of the component with $\log M \geq 7$ is too small, there is a concern that the long-term creep strength of the polymer composition may decrease.

<Requirement (iii)>

The amount of a component with GPC-measured $\log M \leq 3$ is 1.85% or less and preferably 1.75% or less.

The polymer composition satisfying such a requirement (iii) can be obtained by making the amounts of the component (A) and the component (B) that are contained in the polymer composition be within the above-described ranges. The amount of the component with $\log M \leq 3$ is affected by the kinds and concentrations of a catalyst and an electron donor that are used in the production and other polymerization conditions, but the amount of the component with $\log M \leq 3$ can normally be adjusted to decrease by adjusting the intrinsic viscosity $[\eta]$ of the component (A) to increase. In addition, the amount of the component with $\log M \leq 3$ is also affected by the content of the component (A) as well as the intrinsic viscosity $[\eta]$ of the component (A), and the amount of the component with $\log M \leq 3$ normally decreases as the content of the component (A) decreases. Furthermore, regarding hexane that is used as a polymerization solvent, when the proportion of a hexane solvent that is obtained by centrifuging a polymer slurry containing a mother liquid after a second polymerization tank reaction (recycled hexane) being returned to a polymerization tank again is increased, a large amount of a low-molecular weight component that is contained in the recycled hexane is incorporated into a polymer, and the amount of the component with $\log M \leq 3$ becomes large. That is, the amount of the component with $\log M \leq 3$ can be adjusted to decrease by decreasing the content of the recycled hexane being returned to the polymerization layer.

The lower limit of the amount of the component with $\log M \leq 3$ is not particularly limited, but is normally 0.50% or more or 1.00% or more.

When the amount of the component with $\log M \leq 3$ in the polymer composition is suppressed to 1.85% or less, the long-term creep strength becomes favorable.

In addition to satisfying the above-described requirements (i) to (iii), the ethylene-based polymer composition of the present invention has a molecular weight distribution (Mw/Mn) measured by GPC within a range of preferably 30 to 70, more preferably 40 to 65, still more preferably 45 to 65 and particularly preferably 50 to 65.

When Mw/Mn of the polymer composition of the present invention is too low, the shear viscosity of the polymer composition becomes too high, the resin pressure in an extruder increases, and the moldability may deteriorate. In addition, when Mw/Mn is too high, the mixing of the component (A) and the component (B) becomes poor, and there is a concern that the appearance of a pipe during molding may deteriorate.

A chart measured by GPC of the polymer composition of the present invention is normally a bimodal molecular weight distribution.

In addition to satisfying the above-described requirements (i) to (iii), the ethylene-based polymer composition of the present invention has a Z average molecular weight (Mz) measured by GPC of $2.0 \times 10^6$ or higher, more preferably $3.0 \times 10^6$ or higher and still more preferably $4.0 \times 10^6$ or higher. The upper limit is normally $5.5 \times 10^6$ or lower or $5.0 \times 10^6$ or lower.

In addition, in the ethylene-based polymer composition of the present invention, the ratio of Mw/Mn of the component (B) to Mw/Mn of the component (A) (Mw/Mn (B))/(Mw/Mn (A)) is preferably larger than 0.9, more preferably 1.0 or larger and still more preferably 1.1 or larger.

The polymer composition of the present invention has MFR measured at a temperature of 190°C under a load of 5 kg ($MFR_5$) within a range of preferably 0.03 to 0.3 g/10 min and more preferably 0.05 to 0.25 g/10 min.

When $MFR_5$ of the copolymer composition satisfies the above-described range, the creep strength becomes favorable while the moldability and the low sagging properties are maintained.

In addition, in the ethylene-based polymer composition of the present invention, MFR at a temperature of 190°C under a load of 21.6 kg (hereinafter, $MFR_{21.6}$) to $MFR_5$ ($MFR_{21.6}/MFR_5$) is 40 or more and preferably 50 or more. The ratio of $MFR_{21.6}$ to $MFR_5$ ($MFR_{21.6}/MFR_5$) is normally 100 or less. The use of the ethylene-based polymer composition having $MFR_{21.6}/MFR_5$ within the above-described range makes it possible to obtain a polyethylene pipe having excellent moldability and being excellent in terms of failure stress resistance and hot internal pressure creep resistance.

MFRs ($MFR_5$ and $MFR_{21.6}$) of the polymer composition relating to the present invention was measured according to JIS K 7210-1.

<<Ethylene-Based Polymer Composition 2>>

The ethylene-based polymer composition of the present invention can also be defined as described below (hereinafter, referred to as "ethylene-based polymer composition 2").

The ethylene-based polymer composition 2 of the present invention is an ethylene-based polymer composition composed of an ethylene homopolymer and a copolymer of ethylene and an $\alpha$-olefin having four or more carbon atoms, wherein the following requirements (i) to (vi) are satisfied.

(i) The density is within a range of 940 to 960 kg/m$^3$.
(ii) The amount of a component with GPC-measured log M $\geq$ 7 is within a range of 0.35 to 0.80%.
(iii) The amount of a component with GPC-measured log M $\leq$ 3 is 1.85% or less.
(iv) MFR measured at a temperature of 190°C under a load of 5 kg ($MFR_5$) is within a range of 0.03 to 0.3 g/10 min.
(v) A molecular weight distribution (Mw/Mn) measured by GPC is within a range of 30 to 70.
(vi) A pipe to be obtained satisfies the following (a) to (d) at the same time in a hot internal pressure creep test measured according to ISO 1167.

(a) A failure time at a testing temperature of 20°C and a testing circumferential stress of 12.7 MPa is 500 hours or longer,
(b) a failure time at a testing temperature of 80°C and a testing circumferential stress of 6.3 MPa is 100 hours or longer,
(c) a failure time at a testing temperature of 80°C and a testing circumferential stress of 6.1 MPa is 1,000 hours or longer, and
(d) a failure time at a testing temperature of 80°C and a testing circumferential stress of 5.7 MPa is 3,000 hours or longer.

The requirements (i) to (v) are as already described in detail in the present specification, and the requirement (vi) is as described in a pipe section to be described below.

The ethylene-based polymer composition 2 preferably further satisfies the following requirement (vii).

(vii) A chart measured by GPC is bimodal, and a content ratio between a low-molecular weight-side component and a high-molecular weight-side component by peak separation is within a range of 40:60 to 60:40. The content ratio is within a range of more preferably 50:50 to 60:40 and still more preferably 55:45 to 60:40.

The peak separation of the GPC chart can be obtained by performing curve fitting on bimodal peaks that appear on the molecular weight distribution curve with two normal distribution curves. In addition, the peak separation can also be obtained by performing GPC measurement on the entire polymer composition, performing peak separation on a multimodal molecular weight distribution curve to be obtained using commercially available data analysis software or the like and calculating the composition ratios thereof. For example, based on a program created using Visual BASIC of Excel (registered trademark) manufactured Microsoft Corporation, two peak curves to be separated are made to form log-normal distribution, and the molecular weight distribution curve is separated into two peak curves having different molecular weights by convergence calculation. The calculation is executed while changing the initial value so that a curve obtained by recombining the two separated peak curves and the GPC chart almost coincide with each other by comparing both. The calculation is performed by dividing Log (molecular weight) [Log M] at 0.02 intervals and normalizing the intensity so that the area of an actually measured molecular weight curve and the area of a curve obtained by recombining the two separated peak curves.

The low-molecular weight-side component corresponds to the above-described component (A) constituting the ethylene-based polymer composition, and the high-molecular weight-side component corresponds to the above-described component (B) constituting the ethylene-based polymer composition.

In order to achieve the physical properties described in the requirement (vi), the low-molecular weight-side component is desirably composed of an ethylene homopolymer. The ethylene homopolymer (A) can be produced according to a production method to be described below. In addition, the high-molecular weight-side component at that time is composed of a copolymer of ethylene and an $\alpha$-olefin having four or more carbon atoms.

Additionally, a requirement that the ethylene-based polymer composition 2 preferably satisfies is as described above regarding the ethylene-based polymer composition.

<<Pigment and Additive>>

To the ethylene-based polymer composition of the present invention, 0.01 to 3 parts by mass, furthermore, 0.05 to 2 parts by mass of one or more pigments selected from titanium oxide, titanium yellow, phthalocyanine blue, isoindolinone, a quinacridone compound, a condensed azo compound, ultramarine and cobalt blue with respect to 100 parts by mass of the polymer composition (the total amount of (A) + (B)) is preferably added. Addition of such a pigment makes it possible to obtain a pipe suitable for water pipes or gas pipes. The color of the pipe is, for example, blue, yellow, orange, white, red, green, purple or the like.

In addition, to the ethylene-based polymer composition of the present invention, 0.01 to 3 parts by mass, preferably 0.5 to 2.5 parts by mass and still more preferably 2.0 to 2.5 parts by mass of carbon black with respect to 100 parts by mass of the polymer composition (the total amount of (A) + (B)) is preferably added. The addition of carbon black makes it possible to obtain a pipe suitable for water pipes or gas pipes having excellent weather resistance. The color of the pipe in this case is black, gray or the like.

In addition, the ethylene-based polymer composition of the present invention can be used in a variety of molded body uses to be described below after a different resin is added to the polymer composition. As the different resin, an ethylene-based resin such as high-density polyethylene, low-density polyethylene, very low-density polyethylene or ultra low-density polyethylene or polyolefin rubber is exemplified, and the amount of the different resin added is, for example, 10 parts by mass or less with respect to 100 parts by mass of the polymer composition (the total amount of (A) + (B)).

With the ethylene-based polymer composition of the present invention, an additive that is normally used in olefin polymers such as a weather-resistant stabilizer, a heat-resistant stabilizer, an antistatic agent, an anti-slip agent, an anti-blocking agent, an anti-fogging agent, a lubricant, a pigment, a nucleating agent, a plasticizer, an anti-aging agent, a hydrochloric acid absorber or an antioxidant may be blended as necessary to an extent that the object of the present invention is not impaired.

<<Method for Producing Ethylene-Based Polymer Composition>>

In the polymer composition of the present invention, the ethylene homopolymer (A) and the ethylene/$\alpha$-olefin copolymer (B) constituting the ethylene-based polymer composition are preferably produced by slurry polymerization using a $MgCl_2$-based Ziegler-Natta catalyst. The component (A) and the component (B) may be each singly polymerized or may be polymerized in multiple stages. In a case where the components are each singly polymerized, the ethylene-based polymer composition can be obtained by mixing or melt-kneading each component (A or B) by a conventionally well-known method. The ethylene-based polymer composition can be obtained by melting and kneading each component (A or B) using, for example, an extruder, the Brabender plastograph, the Banbury mixer, a kneader, or a blender. In a case where the components are polymerized in multiple stages, the dispersibility of each component (A or B) becomes favorable, and the appearance of a pipe that is molded from the ethylene-based polymer composition according to the present invention becomes favorable.

<<Molded Body and Pipe>>

The ethylene-based polymer composition of the present invention can be used in a variety of existing uses of ethylene-based resins by being molded to obtain a variety of molded bodies. The ethylene-based polymer composition of the present invention is suitable for a pipe use among those. The ethylene-based polymer composition of the present invention has excellent pipe moldability, and a pipe and a multilayer pipe having excellent long-term durability can be obtained by molding the polymer composition. Here, in this multilayer pipe, at least one layer is formed of a layer composed of the copolymer composition of the present invention. In this multilayer pipe molded body, the layer composed of the copolymer composition may be formed only on one surface or may be formed on both surfaces, and the pigment described as the "additional component blended" may be blended into one of both surfaces on which the layer composed of the copolymer composition is formed. A base material constituting this multilayer pipe may be a base material composed of the copolymer composition or a base material composed of a material that is not the copolymer composition.

In a case where the pipe is a multilayer pipe, the different resin is not particularly limited, examples thereof include a crystalline resin, rubber, an adhesive resin, a barrier resin and the like, and specific examples thereof include high-density polyethylene, low-density polyethylene, very low-density polyethylene, ultra low-density polyethylene, polypropylene, ethylene-vinyl acetate copolymers, ethylene-acrylic acid copolymers, ethylene-acrylic acid ester copolymers, ethylene-methacrylic acid copolymers, ethylene-methacrylic acid ester copolymers, ethylene-vinyl alcohol copolymers, saponified ethylene-vinyl acetate copolymers, ethylene-styrene copolymers, ethylene-vinylcyclohexane copolymers, ethylene-norbornene copolymers, polyolefin rubber, styrene-butadiene rubber, styrene-butadiene-styrene block copolymers, isoprene rubber, styrene-isoprene rubber, isobutylene rubber, and the like, acid modified products or hydrogenated products of these resins and the like.

A pipe of the present invention is obtained by molding the copolymer composition of the present invention using a well-known pipe molding method. For example, the pipe can be obtained by melting the copolymer composition at a temperature of 150°C to 220°C, preferably 160°C to 210°C, using an extruder of a pipe production device, extruding the copolymer composition in a cylindrical shape from the die and then cooling the copolymer composition with water.

The shape of the pipe of the present invention can be determined as appropriate depending on the use of the pipe. Examples thereof include polyethylene pipes molded in outer diameters or thicknesses described in ISO 4427, ISO 4437, JIS K 6761, JIS K 6762 or JIS K 6774. In addition, these molded bodies include molded bodies (laminates or the like) including a part composed of the ethylene-based polymer composition and a part composed of the different resin.

The pipe of the present invention satisfies the following (a) to (d) at the same time in a hot internal pressure creep test measured according to ISO 1167.

(a) A failure time at a testing temperature of 20°C and a testing circumferential stress of 12.7 MPa is 500 hours or longer,
(b) a failure time at a testing temperature of 80°C and a testing circumferential stress of 6.3 MPa is 100 hours or longer,
(c) a failure time at a testing temperature of 80°C and a testing circumferential stress of 6.1 MPa is 1,000 hours or longer, and
(d) a failure time at a testing temperature of 80°C and a testing circumferential stress of 5.7 MPa is 3,000 hours or longer.

Examples

Hereinafter, the present invention will be more specifically described based on examples, but the present invention is not limited to these examples.

For each component used in the examples, methods for measuring the characteristics and methods for measuring the physical properties are as described below.

(1) Melt Flow Rate Under Load of 2.16 kg (MFR$_2$, g/10 min)
The melt flow rate was measured under conditions of 190°C and a 2.16 kg load according to JIS K 7210-1.
(2) Melt Flow Rate Under Load of 5 kg (MFR$_5$, g/10 min)
The melt flow rate was measured under conditions of 190°C and a 5 kg load according to JIS K 7210-1.
(3) Melt Flow Rate Under Load of 21.6 kg (MFR$_{21.6}$, g/10 min)
The melt flow rate was measured under conditions of 190°C and a 21.6 kg load according to JIS K 7210-1.
(4) Density (kg/m$^3$)

The density was measured by a density gradient tube method after a strand that was obtained during MFR measurement was thermally treated at 100°C for one hour and further left to stand at room temperature for one hour according to JIS K 7112.

The density (D$_B$) of an ethylene/$\alpha$-olefin copolymer (B) in multi-stage polymerization was obtained from the mass fraction BR$_A$ and density D$_A$ of an ethylene homopolymer (A) and the density D$_C$ of an ethylene-based polymer composition using the following equation (Eq - 1).

$$BR_B/D_B \ = \ (1/D_C) \ - \ (BR_A/D_A) \ ------- \ (Eq \ - \ 1)$$

(5) Intrinsic Viscosity ([$\eta$], dl/g)

Regarding the intrinsic viscosity, approximately 20 mg of a measurement sample was dissolved in 15 ml of decalin, and the specific viscosity $\eta$sp was measured in an oil bath at 135°C. Five milliliters of a decalin solvent was added to this decalin solution for dilution, and the specific viscosity $\eta$sp was then measured in the same manner. This dilution operation was further repeated twice, and a value of $\eta$sp/C when the concentration (C) was extrapolated to zero was obtained as the intrinsic viscosity [$\eta$] (unit: dl/g) as shown in the following equation (Eq - 2).

$$[\eta] \ = \ lim \ (\eta sp/C) \quad (C \to 0) \ ------- \ (Eq \ - \ 2)$$

In addition, the intrinsic viscosity ($[\eta]_B$) of the ethylene/$\alpha$-olefin copolymer (B) in the multi-stage polymerization was obtained from the mass fraction $BR_A$ and intrinsic viscosity $[\eta]_A$ of the ethylene homopolymer and the intrinsic viscosity $[\eta]_C$ of the ethylene-based polymer composition using the following equation (Eq - 3).

$$[\eta]_B = ([\eta]_C - [\eta]_A \times BR_A))/(1 - BR_A) \ \text{------} \ (Eq - 3)$$

(6) Amount of Component with log M $\geq$ 7 and Amount of Component with log M $\leq$ 3

The amount of a component with log M $\geq$ 7 was measured as described below using a gel permeation chromatograph HLC-8321 GPC/HT manufactured by Tosoh Corporation.

Analysis software: Chromatography data system Empower 3 (manufactured by Waters Corporation, registered trademark), column: TSKgel GMH6-HT $\times$ 2 + TSKgel GMH6-HTL $\times$ 2 (inner diameter 7.5 mm $\times$ length 30 cm, manufactured by Tosoh Corporation), mobile phase: o-dichlorobenzene (manufactured by FUJIFILM Wako Pure Chemical Corporation, guaranteed reagent), detector: differential refractometer (built-in device), column temperature: 140°C, flow rate: 1.0 mL/min, injection amount: 400 $\mu$L, sampling time interval: 0.5 seconds, specimen concentration: 0.1% (w/v), molecular weight calibration: monodisperse polystyrene (manufactured by Tosoh Corporation): #3std set.

A molecular weight distribution curve was created in terms of the standard polyethylene molecular weight according to the procedure of general-purpose calibration described in Z. Crubisic, P. Rempp, H. Benoit, J. Polym. Sci., B5, 753 (1967).

The amount of the component with log M $\geq$ 7 was calculated by the following method using the molecular weight distribution curve (G1) of the obtained ethylene-based polymer composition. In the present specification, when "molecular weight distribution curve" is mentioned, it refers to a differential molecular weight distribution curve unless particularly otherwise described, and when "area" is mentioned regarding the molecular weight distribution curve, it refers to the area of a region that is formed between the molecular weight distribution curve and the baseline.

At each numerical datum of (G1), Log (molecular weight, hereinafter M) was divided at 0.02 intervals, and furthermore, regarding each of (G1), the intensity [dwt/d(log M)] was normalized so that the area reached one.

After that, the sum of dwt/dlog M normalized at log M $\geq$ 7 was obtained and regarded as the amount of the component with log M $\geq$ 7. Similarly, the sum of dwt/dlog M normalized at log M $\leq$ 3 was obtained and regarded as the amount of the component with log M $\leq$ 3.

(7) Molecular Weight Distribution (Mw/Mn) and Average Molecular Weight (Mw, Mn, Mz)

Mw/Mn was calculated from the weight-average molecular weight (Mw), the number-average molecular weight (Mn) and the z average molecular weight (Mz) calculated in terms of the standard polyethylene molecular weight by the above-described method (6).

(7-2) Peak Separation of Molecular Weight Distribution

Curve fitting was performed on bimodal peaks that appeared on the molecular weight distribution curve with two normal distribution curves, the peaks were separated, and the content ratio of each component and the weight-average molecular weight (Mw), number-average molecular weight (Mn) and molecular weight distribution (Mw/Mn) of each component were obtained.

(8) Hot Internal Pressure Creep Test Failure Time

<Method for Molding Pipe>

The ethylene-based polymer composition (C) was extruded using a pipe molding machine having 65 mm$\varphi$ and L/D of 25 manufactured by Ikegai Corporation at a set temperature of 200°C and an extrusion amount of 22 kg/hr, thereby obtaining a polyethylene pipe having SDR = 11 and 60 mm$\varphi$.

<Internal Pressure Creep Failure Time>

The internal pressure creep failure time was measured according to ISO 1167 with a pipe length of 50 cm at a temperature of 20°C or 80°C with a circumferential stress within a range of 11 to 15 MPa in the case of 20°C and within a range of 5 to 7 MPa in the case of 80°C.

(9) 80°C Tensile Fatigue Strength (FNFT failure stress: MPa)

A square prism that was 6 mm in height × 6 mm in width × 60 mm in length was cut from the obtained polyethylene pipe and used as an evaluation specimen. The tensile fatigue strength (test piece shape) was measured according to JIS K 6774. The outline of the testing conditions of a full circumference notch type and a notch depth of 1 mm will be described below.

Measurement was performed at several points with a test piece shape (6 mm × 6 mm × 60 mm square prism notch provided), a testing waveform and a testing frequency (square wave, 0.5 Hz), a testing temperature of 80°C and an actual stress within a range of 10 to 18 MPa, and the number of times of fatigue upon the fracture of the specimen was regarded as the fatigue strength. Measurement was performed at three or more points having different actual stress with the number of times of rupture of three or more digits or at an actual stress within a range of 3 MPa or higher, an approximate formula was created by the least squares method of power approximation, and actual stresses corresponding to the numbers of times of rupture of 10,000 and 100,000 were obtained.

[Example 1]

<Production of Ethylene Homopolymer (A-1)>

As a catalyst, a $MgCl_2$-based Ziegler-Natta-based catalyst was used.

n-Hexane, the catalyst and triethylaluminum were continuously supplied to a first polymerization tank having an internal volume of 0.34 $m^3$ at 70.7 L/hr, 1.9 mmol-Ti/hr and 11 mmol-Al/hr, respectively, and an ethylene homopolymer (A) was polymerized under conditions of a polymerization temperature of 85°C, a reaction pressure of 0.65 MPaG and an average retention time of 2.0 hr while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.4 mol/mol).

From the contents continuously extracted from the first polymerization tank, unreacted ethylene and hydrogen were substantially removed in a flash drum held at an internal pressure of 0.03 MPa and 30°C.

The physical properties of the homopolymer (A-1) from which unreacted ethylene and hydrogen had been substantially removed were measured by the above-described methods.

<Production of Copolymer (B-1) and Copolymer Composition (C-1)>

After that, the contents were continuously supplied to a second polymerization tank having an internal volume of 0.2 $m^3$, and an ethylene/1-butene copolymer (B-1) was polymerized under conditions of n-hexane at 57 L/hr, a polymerization temperature of 72°C, a reaction pressure of 0.30 MPaG and an average retention time of 1.0 hr. During the polymerization, ethylene, 1-butene, hydrogen and nitrogen were continuously suppled to maintain a constant gas composition. The supply ratio of 1-butene to ethylene was 0.031 kg/kg, and the gas composition (mole ratio) of hydrogen to ethylene (hydrogen/ethylene) was 0.016 mol/mol. In the second polymerization tank as well, the contents in the polymerization tank were continuously extracted so that the liquid level in the polymerization tank became constant, n-hexane and an unreacted monomer in the contents were removed and dried with a solvent separation device, and an ethylene-based polymer composition (C-1) containing the homopolymer (A-1) and the ethylene/1-butene copolymer (B-1) was obtained. The yield of the obtained copolymer composition (C-1) was 16 kg/hr.

The amount and physical properties of the copolymer (B-1) that was contained in the composition (C-1) and the physical properties of the composition (C-1) were measured by the above-described methods.

Next, 0.15 parts by mass of calcium stearate as a hydrochloric acid absorber, 0.2 parts by mass of IRGANOX 1010 and 0.1 parts by mass of IRGAFOS 168 manufactured by BASF as antioxidants, and 0.1 parts by mass of TINUVIN 622LD manufactured by BASF as a weathering stabilizer were blended with 100 parts by mass of the copolymer composition, then melt-kneaded using a GM40-28 extruder manufactured by GM ENGINEERING Co., Ltd. under conditions of a set temperature of 200°C and a screw rotation rate of 80 rpm and extruded in a strand shape, thereby obtaining a pellet.

The physical properties of the obtained pellet of the ethylene-based polymer composition are shown in Table 1. In addition, a pipe was molded by the above-described method, and the evaluation results of performance thereof are shown in Table 2.

[Example 2]

n-Hexane, the same catalyst as in Example 1 and triethylaluminum were continuously supplied to a first polymerization tank having an internal volume of 0.34 m$^3$ at 71.8 L/hr, 1.9 mmol-Ti/hr and 14 mmol-Al/hr, respectively, and an ethylene homopolymer (A-2) was polymerized under conditions of the same polymerization temperature and the same reaction pressure as in Example 1 and an average retention time of 1.9 hr while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.3 mol/mol).

(A-2) extracted from the first polymerization tank was continuously supplied to a second polymerization tank having an internal volume of 0.2 m$^3$, and an ethylene/1-butene copolymer (B-2) was polymerized under the same conditions as in Example 1. During the polymerization, ethylene, 1-butene, hydrogen and nitrogen were continuously suppled to maintain a constant gas composition. The supply ratio of 1-butene to ethylene was 0.031 kg/kg, and the gas composition (mole ratio) of hydrogen to ethylene (hydrogen/ethylene) was 0.017 mol/mol. From the obtained contents, the solvent and an unreacted monomer were separated and dried by the same method as in Example 1, thereby obtaining an ethylene-based polymer composition. The yield was 17 kg/hr.

In addition, the amount and physical properties of (B-2) that was contained in the composition (C-2) and the physical properties of the composition (C-2) that were measured by the same methods as in Example 1, and the evaluation results of performance of a pipe molded by the same method as in Example 1 are shown in Table 1 and Table 2, respectively.

[Example 3]

n-Hexane, the same catalyst as in Example 1 and triethylaluminum were continuously supplied to a first polymerization tank having an internal volume of 0.34 m$^3$ at 70.4 L/hr, 1.9 mmol-Ti/hr and 11 mmol-Al/hr, respectively, and an ethylene homopolymer (A-3) was polymerized under conditions of the same polymerization temperature and the same reaction pressure as in Example 1 and an average retention time of 1.9 hr while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.2 mol/mol).

(A-3) extracted from the first polymerization tank was continuously supplied to a second polymerization tank having an internal volume of 0.2 m$^3$, and an ethylene/1-butene copolymer (B-3) was polymerized under the same conditions as in Example 1. During the polymerization, ethylene, 1-butene, hydrogen and nitrogen were continuously suppled to maintain a constant gas composition. The supply ratio of 1-butene to ethylene was 0.018 kg/kg, and the gas composition (mole ratio) of hydrogen to ethylene (hydrogen/ethylene) was 0.007 mol/mol. From the obtained contents, the solvent and an unreacted monomer were separated and dried by the same method as in Example 1, thereby obtaining an ethylene-based polymer composition. The yield was 17 kg/hr.

In addition, the physical properties measured by the same methods as in Example 1 and the evaluation results of performance of a pipe molded by the same method as in Example 1 are shown in Table 1 and Table 2, respectively.

[Comparative Example 1]

n-Hexane, the same catalyst as in Example 1 and triethylaluminum were continuously supplied to a first polymerization tank having an internal volume of 0.34 m$^3$ at 70.3 L/hr, 1.9 mmol-Ti/hr and 11 mmol-Al/hr, respectively, and an ethylene homopolymer was polymerized under conditions of the same polymerization temperature and the same reaction pressure as in Example 1 and an average retention time of 1.9 hr while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.2 mol/mol).

The contents extracted from the first polymerization tank were continuously supplied to a second polymerization tank having an internal volume of 0.2 m$^3$, and an ethylene/1-butene copolymer was polymerized under the same conditions as in Example 1. During the polymerization, ethylene, 1-butene, hydrogen and nitrogen were continuously suppled to maintain a constant gas composition. The supply ratio of 1-butene to ethylene was 0.043 kg/kg, and the gas composition (mole ratio) of hydrogen to ethylene (hydrogen/ethylene) was 0.007 mol/mol. From the obtained contents, the solvent and an unreacted monomer were separated and dried by the same method as in Example 1, thereby obtaining an ethylene-based polymer composition. The yield was 20 kg/hr.

In addition, the physical properties measured by the same methods as in Example 1 and the evaluation results of performance of a pipe molded by the same method as in Example 1 are shown in Table 1 and Table 2, respectively.

[Comparative Example 2]

n-Hexane, the same catalyst as in Example 1 and triethylaluminum were continuously supplied to a first polymerization tank having an internal volume of 0.34 m$^3$ at 73.6 L/hr, 1.9 mmol-Ti/hr and 15 mmol-Al/hr, respectively, and an ethylene homopolymer was polymerized under the same conditions as in Example 1 while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.5 mol/mol).

The contents extracted from the first polymerization tank were continuously supplied to a second polymerization tank having an internal volume of 0.2 m$^3$, and an ethylene/1-butene copolymer was polymerized under the same conditions as in Example 1. During the polymerization, ethylene, 1-butene, hydrogen and nitrogen were continuously suppled to maintain a constant gas composition. The supply ratio of 1-butene to ethylene was 0.050 kg/kg, and the gas composition (mole ratio) of hydrogen to ethylene (hydrogen/ethylene) was 0.025 mol/mol. From the obtained contents, the solvent and an unreacted monomer were separated and dried by the same method as in Example 1, thereby obtaining an ethylene-based polymer composition. The yield was 17 kg/hr.

In addition, the physical properties measured by the same methods as in Example 1 and the evaluation results of performance of a pipe molded by the same method as in Example 1 are shown in Table 1 and Table 2, respectively.

[Comparative Example 3]

n-Hexane, the same catalyst as in Example 1 and triethylaluminum were continuously supplied to a first polymerization tank having an internal volume of 0.34 m$^3$ at 68 L/hr, 3.8 mmol-Ti/hr and 50 mmol-Al/hr, respectively, and an ethylene homopolymer was polymerized under conditions of a polymerization temperature of 85°C a reaction pressure of 0.6 MPaG and an average retention time of 2.0 hr while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.1 mol/mol).

The contents extracted from the first polymerization tank were continuously supplied to a second polymerization tank having an internal volume of 0.2 m$^3$, and an ethylene/1-butene copolymer was polymerized under conditions of a polymerization reaction of 72°C, a reaction pressure of 0.3 MPaG and an average retention time of 1.0 hr. During the polymerization, ethylene, 1-butene, hydrogen and nitrogen were continuously suppled to maintain a constant gas composition. The supply ratio of 1-butene to ethylene was 0.077 kg/kg, and the gas composition (mole ratio) of hydrogen to ethylene (hydrogen/ethylene) was 0.020 mol/mol. From the obtained contents, the solvent and an unreacted monomer were separated and dried by the same method as in Example 1, thereby obtaining an ethylene-based polymer composition. The yield was 19 kg/hr.

In addition, the physical properties measured by the same methods as in Example 1 and the evaluation results of performance of a pipe molded by the same method as in Example 1 are shown in Table 1 and Table 2, respectively.

[Comparative Example 4]

n-Hexane, the same catalyst as in Example 1 and triethylaluminum were continuously supplied to a first polymerization tank having an internal volume of 0.34 m$^3$ at 68 L/hr, 3.2 mmol-Ti/hr and 50 mmol-Al/hr, respectively, and an ethylene homopolymer was polymerized under the same conditions as in Comparative Example 3 while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 4.8 mol/mol).

The contents extracted from the first polymerization tank were continuously supplied to a second polymerization tank having an internal volume of 0.2 m$^3$, and an ethylene/1-butene copolymer was polymerized under conditions of the same polymerization temperature and the same reaction pressure as in Comparative Example 3 and an average retention time of 1.1 hr. During the polymerization, ethylene, 1-butene, hydrogen and nitrogen were continuously suppled to maintain a constant gas composition. The supply ratio of 1-butene to ethylene was 0.077 kg/kg, and the gas composition (mole ratio) of hydrogen to ethylene (hydrogen/ethylene) was 0.011 mol/mol. From the obtained contents, the solvent and an unreacted monomer were separated and dried by the same method as in Example 1, thereby obtaining an ethylene-based polymer composition. The yield was 17 kg/hr.

In addition, the physical properties measured by the same methods as in Example 1 and the evaluation results of performance of a pipe molded by the same method as in Example 1 are shown in Table 1 and Table 2, respectively.

[Comparative Example 5]

n-Hexane, the same catalyst as in Example 1 and triethylaluminum were continuously supplied to a first polymerization tank having an internal volume of 0.34 m$^3$ at 68 L/hr, 3.1 mmol-Ti/hr and 50 mmol-Al/hr, respectively, and an ethylene homopolymer was polymerized under the same conditions as in Comparative Example 3 while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.4 mol/mol).

The contents extracted from the first polymerization tank were continuously supplied to a second polymerization tank having an internal volume of 0.2 m$^3$, and an ethylene/1-butene copolymer was polymerized under the same conditions as in Comparative Example 3. During the polymerization, ethylene, 1-butene, hydrogen and nitrogen were continuously suppled to maintain a constant gas composition. The supply ratio of 1-butene to ethylene was 0.062 kg/kg, and the gas composition (mole ratio) of hydrogen to ethylene (hydrogen/ethylene) was 0.017 mol/mol. From the obtained contents, the solvent and an unreacted monomer were separated and dried by the same method as in Example 1, thereby obtaining an ethylene-based polymer composition. The yield was 19 kg/hr.

In addition, the physical properties measured by the same methods as in Example 1 and the evaluation results of performance of a pipe molded by the same method as in Example 1 are shown in Table 1 and Table 2, respectively.

[Example 4]

n-Hexane, the same catalyst as in Example 1 and triethylaluminum were continuously supplied to a first polymerization tank having an internal volume of 60 m$^3$ at 14850 L/hr, 1.1 mol-Ti/hr and 7.4 mol-Al/hr, respectively, and an ethylene homopolymer was polymerized under the same conditions as in Comparative Example 3 while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.9 mol/mol).

The contents extracted from the first polymerization tank were continuously supplied to a second polymerization tank having an internal volume of 60 m$^3$, and an ethylene/1-butene copolymer was polymerized under the same conditions as in Comparative Example 3. During the polymerization, ethylene, 1-butene, hydrogen and nitrogen were continuously suppled to maintain a constant gas composition. The supply ratio of 1-butene to ethylene was 0.018 kg/kg, and the gas composition (mole ratio) of hydrogen to ethylene (hydrogen/ethylene) was 0.021 mol/mol. From the obtained contents, the solvent and an unreacted monomer were separated and dried by the same method as in Example 1, thereby obtaining an ethylene-based polymer composition. The yield was 11000 kg/hr.

[Example 5]

n-Hexane, the same catalyst as in Example 1 and triethylaluminum were continuously supplied to a first polymerization tank having an internal volume of 60 m$^3$ at 14850 L/hr, 1.1 mol-Ti/hr and 7.4 mol-Al/hr, respectively, and an ethylene homopolymer was polymerized under the same conditions as in Comparative Example 3 while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.9 mol/mol).

The contents extracted from the first polymerization tank were continuously supplied to a second polymerization tank having an internal volume of 60 m$^3$, and an ethylene/1-butene copolymer was polymerized under the same conditions as in Comparative Example 3. During the polymerization, ethylene, 1-butene, hydrogen and nitrogen were continuously suppled to maintain a constant gas composition. The supply ratio of 1-butene to ethylene was 0.010 kg/kg, and the gas composition (mole ratio) of hydrogen to ethylene (hydrogen/ethylene) was 0.016 mol/mol. From the obtained contents, the solvent and an unreacted monomer were separated and dried by the same method as in Example 1, thereby obtaining an ethylene-based polymer composition. The yield was 11000 kg/hr.

[Reference Example 1]

n-Hexane, the same catalyst as in Example 1 and triethylaluminum were continuously supplied to a first polymerization tank having an internal volume of 60 m$^3$ at 20200 L/hr, 1.6 mol-Ti/hr and 10 mol-Al/hr, respectively, and an ethylene homopolymer was polymerized under conditions of a polymerization temperature of 87°C a reaction pressure of 0.6 MPaG and an average retention time of 2.0 hr while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 6.4 mol/mol).

The contents extracted from the first polymerization tank were continuously supplied to a second polymerization tank having an internal volume of 60 m$^3$, and an ethylene/1-butene copolymer was polymerized under conditions of a polymerization reaction of 84°C, a reaction pressure of 0.3 MPaG and an average retention time of 1.0 hr. During the polymerization, ethylene, 1-butene, hydrogen and nitrogen were continuously suppled to maintain a constant gas composition. The supply ratio of 1-butene to ethylene was 0.02 kg/kg, and the gas composition (mole ratio) of hydrogen to ethylene (hydrogen/ethylene) was 0.047 mol/mol. From the obtained contents, the solvent and an unreacted monomer were separated and dried by the same method as in Example 1, thereby obtaining an ethylene-based polymer composition. The yield was 16000 kg/hr.

[Reference Example 2]

n-Hexane, the same catalyst as in Example 1 and triethylaluminum were continuously supplied to a first polymerization tank having an internal volume of 60 m$^3$ at 19600 L/hr, 1.3 mol-Ti/hr and 9.8 mol-Al/hr, respectively, and an ethylene homopolymer was polymerized under the same conditions as in Comparative Example 3 while the contents in the polymerization tank were continuously extracted so that the liquid level in the polymerization tank became constant. During the polymerization, ethylene, hydrogen and nitrogen were continuously suppled to maintain a constant gas composition (gas composition (mole ratio): hydrogen/ethylene = 5.2 mol/mol).

The contents extracted from the first polymerization tank were continuously supplied to a second polymerization tank having an internal volume of 60 m$^3$, and an ethylene/1-butene copolymer was polymerized under the same conditions as in Comparative Example 3. During the polymerization, ethylene, 1-butene, hydrogen and nitrogen were continuously suppled to maintain a constant gas composition. The supply ratio of 1-butene to ethylene was 0.069 kg/kg, and the gas composition (mole ratio) of hydrogen to ethylene (hydrogen/ethylene) was 0.057 mol/mol. From the obtained contents, the solvent and an unreacted monomer were separated and dried by the same method as in Example 1, thereby obtaining an ethylene-based polymer composition. The yield was 13200 kg/hr.

[Comparison between Examples and Comparative Examples]

It is found that, compared with Comparative Examples 3 to 5 where the amount of the component with log M ≥ 7 did not satisfy the requirement (ii), in all of Examples 1 to 3, the internal pressure creep failure times at 80°C and σ = 5.7 MPa were significantly excellent.

It is found that, compared with Comparative Examples 1 and 2 where the amount of the component with log M ≥ 7 satisfied the requirement (ii) but the amount of the component with log M ≤ 3 did not satisfy the requirement (iii), in all of Examples 1 to 3, the internal pressure creep failure times at 20°C and σ = 12.7 MPa, at 80°C and σ = 6.3 MPa and at 80°C and σ = 6.1 MPa were significantly excellent.

That is, the pipes obtained in Examples 1 to 3 can be said to be excellent in terms of the internal pressure creep failure time at a wide range of temperatures and under a wide range of pressure conditions.

[Table 1]

Table 1

| | | | Example 1 | Example 2 | Example 3 | Comparative Example 1 | Comparative Example 2 | Comparative Example 3 |
|---|---|---|---|---|---|---|---|---|
| Ethylene homopolymer (A) | Proportion | Mass% | 54 | 54 | 54 | 54 | 52 | 52 |
| | MFR2 | g/10 min | 255 | 320 | 270 | 300 | 325 | 270 |
| | [η] | dl/g | 0.66 | 0.63 | 0.65 | 0.64 | 0.63 | 0.65 |
| | Density | kg/m$^3$ | 966 | 969 | 968 | 969 | 969 | 972 |
| Ethylene/α-olefin copolymer (B) | Proportion | Mass% | 46 | 46 | 46 | 46 | 48 | 48 |
| | α-Olefin | - | 1-Butene | 1-Butene | 1-Butene | 1-Butene | 1-Butene | 1-Butene |
| | Density | kg/m$^3$ | 931 | 932 | 933 | 925 | 925 | 920 |
| | [η] | dl/g | 8.7 | 8.3 | 10.8 | 8.8 | 7.70 | 6.4 |
| Ethylene-based polymer composition (C) | MFR$_5$ | g/10 min | 0.09 | 0.10 | 0.05 | 0.11 | 0.13 | 0.22 |
| | MFR$_{21}$ | g/10 min | 5.6 | 5.40 | 3.9 | 6.1 | 6.1 | - |
| | MFR$_{21}$/MFR$_5$ | - | 62.2 | 54.0 | 78.0 | 55.5 | 46.9 | - |
| | [η] | dl/g | 4.43 | 4.30 | 5.21 | 4.42 | 4.20 | 3.45 |
| | Density | kg/m$^3$ | 950 | 952 | 952 | 949 | 948 | 947 |
| GPC | Mn | - | 9.12E+03 | 9.26E+03 | 9.52E+03 | 8.69E+03 | 8.60E+03 | 8.96E+03 |
| | Mw | - | 4.98E+05 | 4.87E+05 | 5.92E+05 | 5.06E+05 | 4.27E+05 | 3.70E+05 |
| | Mz | - | 4.36E+06 | 4.09E+06 | 4.62E+06 | 4.63E+06 | 3.85E+06 | 3.20E+06 |
| | Mw/Mn | - | 54.7 | 52.6 | 62.2 | 58.2 | 49.7 | 41.3 |
| | logM ≤ 3 Amount of component | % | 1.59 | 1.54 | 1.40 | 1.88 | 1.89 | 1.84 |
| | logM ≥ 7 Amount of component | % | 0.50 | 0.44 | 0.65 | 0.59 | 0.35 | 0.19 |
| GPC peak separation low-molecular weight-side | Proportion | % | 58 | 59 | 59 | 59 | 57 | 57 |
| | Mw | - | 2.8E+04 | 2.8E+04 | 3.0E+04 | 3.1E+04 | 3.0E+04 | 2.9E+04 |
| | Mw/Mn | - | 5.0 | 5.5 | 5.0 | 5.8 | 5.80 | 5.7 |

(continued)

| | | | Example 1 | Example 2 | Example 3 | Comparative Example 1 | Comparative Example 2 | Comparative Example 3 |
|---|---|---|---|---|---|---|---|---|
| GPC peak separation high-molecular weight-side | Proportion | % | 42 | 41 | 41 | 41 | 43 | 43 |
| | Mw | - | 1.2E+06 | 1.1E+06 | 1.5E+06 | 1.3E+06 | 9.9E+05 | 9.8E+05 |
| | Mw/Mn | - | 6.0 | 5.8 | 6.0 | 6.8 | 6.9 | 6.8 |
| | | | Comparative Example 4 | Comparative Example 5 | Example 4 | Example 5 | Reference Example 1 | Reference Example 2 |
| Ethylene homopolymer (A) | Proportion | Mass% | 54 | 54 | 54 | 54 | 51 | 60 |
| | MFR2 | g/10 min | 285 | 395 | 290 | 260 | 850 | 275 |
| | [η] | dl/g | 0.65 | 0.60 | 0.64 | 0.66 | 0.52 | 0.65 |
| | Density | kg/m³ | 973 | 973 | 970 | 970 | - | - |
| Ethylene/α-olefin copolymer (B) | Proportion | Mass% | 46 | 46 | 46 | 46 | 50 | 41 |
| | α-Olefin | - | 1-Butene | 1-Butene | 1-Butene | 1-Butene | 1-Butene | 1-Butene |
| | Density | kg/m³ | 918 | 918 | 931 | 933 | - | - |
| | [η] | dl/g | 7.27 | 7.25 | 8.5 | 9.2 | 7.14 | 5.81 |
| | MFR5 | g/10 min | 0.22 | 0.16 | 0.077 | 0.059 | 0.26 | 0.66 |
| | MFR21 | g/10 min | - | - | 7.2 | 6.4 | - | - |
| | MFR21/MFR5 | - | - | - | 93.5 | 108 | - | - |
| Ethylene-based polymer composition (C) | [η] | dl/g | 3.68 | 3.66 | 4.26 | 4.59 | 3.8 | 2.7 |
| | Density | kg/m³ | 948 | 948 | 952 | 953 | 952 | 951 |
| GPC | Mn | - | 8.95E+03 | 8.44E+03 | 9.72E+03 | 9.83E+03 | 7.62E+03 | 8.84E+03 |
| | Mw | - | 3.97E+05 | 3.78E+05 | 5.27E+05 | 5.74E+05 | 3.20E+05 | 2.35E+05 |
| | Mz | - | 3.61E+06 | 3.13E+06 | 4.42E+06 | 4.64E+06 | 2.44E+06 | 1.63E+06 |
| | Mw/Mn | - | 44.4 | 44.9 | 54.3 | 58.4 | 42.1 | 26.6 |
| | logM ≤ 3 Amount of component | % | 1.86 | 2.07 | 1.25 | 1.18 | 2.01 | 1.43 |
| | logM ≥ 7 Amount of component | % | 0.28 | 0.19 | 0.52 | 0.63 | 0.08 | 0.00 |

17

(continued)

| | | | Comparative Example 4 | Comparative Example 5 | Example 4 | Example 5 | Reference Example 1 | Reference Example 2 |
|---|---|---|---|---|---|---|---|---|
| GPC peak separation low-molecular weight-side | Proportion | % | 59 | 59 | 58 | 57 | - | - |
| | Mw | - | 3.0E+04 | 3.0E+04 | 3.1E+04 | 3.2E+04 | - | - |
| | Mw/Mn | - | 5.6 | 6.1 | 5.8 | 5.7 | - | - |
| GPC peak separation high-molecular weight-side | Proportion | % | 41 | 41 | 42 | 43 | - | - |
| | Mw | - | 9.9E+05 | 9.8E+05 | 1.3E+06 | 1.4E+06 | - | - |
| | Mw/Mn | - | 6.5 | 6.0 | 5.7 | 6.4 | - | - |

[Table 2]

[Table 2]

Table 2

| | | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|---|
| Hot internal pressure creep test, failure time | 20°C, σ=12.7 MPa | Hours | 1000 | 955 | 1490 | 105 | 205 | 80 | 80 | 118 |
| | 80°C, σ=6.3 MPa | Hours | 170 | 750 | >1490 | 3.5 | 6 | - | - | - |
| | 80°C, σ=6.1 MPa | Hours | 1300 | 1100 | >1490 | 40 | 54 | - | - | - |
| | 80°C, σ=5.7 MPa | Hours | >3700 | >3300 | 3600 | 1100 | >1800 | 10 | 14 | 60 |
| FNFT failure stress | 10,000 Times | MPa | 11.5 | 11 | 11.6 | 10.8 | 11.3 | 10.3 | 11.6 | 10.5 |
| | 100,000 Times | MPa | 9.9 | 9.0 | 10.3 | 9.8 | 9.7 | 9.6 | 10.5 | 7.1 |

Industrial Applicability

The ethylene-based polymer composition of the present invention having excellent moldability and mechanical strengths is suitably used in a pipe use such as a water pipe or a gas pipe.

## Claims

1.  An ethylene-based polymer composition comprising: 40 to 60 mass% of an ethylene homopolymer (A) having MFR measured at a temperature of 190°C under a load of 2.16 kg ($MFR_2$) within a range of 100 to 600 g/10 min; and 60 to 40 mass% of a copolymer (B) of ethylene and an $\alpha$-olefin having four or more carbon atoms, provided that a total amount of (A) + (B) is 100 mass%,
    wherein the following requirements (i) to (iii) are satisfied:

    (i) a density is within a range of 940 to 960 $kg/m^3$,
    (ii) an amount of a component with GPC-measured log M $\geq$ 7 is within a range of 0.35 to 0.80%, and
    (iii) an amount of a component with GPC-measured log M $\leq$ 3 is 1.85% or less.

2.  The ethylene-based polymer composition according to claim 1, wherein the $\alpha$-olefin having four or more carbon atoms is 1-butene or 1-hexene.

3.  The ethylene-based polymer composition according to claim 1, wherein the ethylene/$\alpha$-olefin copolymer (B) has an intrinsic viscosity [$\eta$] within a range of 7.0 to 14.0 dl/g.

4.  The ethylene-based polymer composition according to claim 1, wherein the ethylene-based polymer composition has MFR measured at a temperature of 190°C under a load of 5 kg ($MFR_5$) within a range of 0.03 to 0.3 g/10 min.

5.  The ethylene-based polymer composition according to claim 1, wherein the ethylene-based polymer composition has a molecular weight distribution (Mw/Mn) measured by GPC within a range of 30 to 70.

6.  The ethylene-based polymer composition according to claim 1, wherein the ethylene homopolymer (A) and the ethylene/$\alpha$-olefin copolymer (B) have been polymerized using a Ziegler-Natta-based catalyst.

7.  A pipe, comprising the ethylene-based polymer composition according to any one of claims 1 to 6.

8.  The pipe according to claim 7, wherein the following (a) to (d) are satisfied at the same time in a hot internal pressure creep test measured according to ISO 1167:

    (a) a failure time at a testing temperature of 20°C and a testing circumferential stress of 12.7 MPa is 500 hours or longer,
    (b) a failure time at a testing temperature of 80°C and a testing circumferential stress of 6.3 MPa is 100 hours or longer,
    (c) a failure time at a testing temperature of 80°C and a testing circumferential stress of 6.1 MPa is 1,000 hours or longer, and
    (d) a failure time at a testing temperature of 80°C and a testing circumferential stress of 5.7 MPa is 3,000 hours or longer.

9.  The pipe according to claim 7, wherein the pipe is formed by adding 0.01 to 3 parts by mass of one or more pigments selected from carbon black, titanium oxide, titanium yellow, phthalocyanine blue, isoindolinone, a quinacridone compound, a condensed azo compound, ultramarine and cobalt blue with respect to 100 parts by mass of the ethylene-based polymer composition.

10. An ethylene-based polymer composition composed of an ethylene homopolymer and a copolymer of ethylene and an $\alpha$-olefin having four or more carbon atoms, wherein the following requirements (i) to (vi) are satisfied:

    (i) a density is within a range of 940 to 960 $kg/m^3$,
    (ii) an amount of a component with GPC-measured log M $\geq$ 7 is within a range of 0.35 to 0.80%,
    (iii) an amount of a component with GPC-measured log M $\leq$ 3 is 1.85% or less,

(iv) MFR measured at a temperature of 190°C under a load of 5 kg (MFR$_5$) is within a range of 0.03 to 0.3 g/10 min,
(v) a molecular weight distribution (Mw/Mn) measured by GPC is within a range of 30 to 70, and
(vi) a pipe to be obtained satisfies the following (a) to (d) at the same time in a hot internal pressure creep test measured according to ISO 1167,

(a) a failure time at a testing temperature of 20°C and a testing circumferential stress of 12.7 MPa is 500 hours or longer,
(b) a failure time at a testing temperature of 80°C and a testing circumferential stress of 6.3 MPa is 100 hours or longer,
(c) a failure time at a testing temperature of 80°C and a testing circumferential stress of 6.1 MPa is 1,000 hours or longer, and
(d) a failure time at a testing temperature of 80°C and a testing circumferential stress of 5.7 MPa is 3,000 hours or longer.

11. The ethylene-based polymer composition according to claim 10, wherein the following requirement (vii) is further satisfied:
(vii) a chart measured by GPC is bimodal, and a content ratio between a low-molecular weight-side component and a high-molecular weight-side component by peak separation is within a range of 40:60 to 60:40.

12. The ethylene-based polymer composition according to claim 11, wherein the low-molecular weight-side component is composed of an ethylene homopolymer, and the high-molecular weight-side component is composed of a copolymer of ethylene and an α-olefin having four or more carbon atoms.

## INTERNATIONAL SEARCH REPORT

| International application No. |
| --- |
| **PCT/JP2023/012436** |

### A. CLASSIFICATION OF SUBJECT MATTER

**C08L 23/06**(2006.01)i; **C08L 23/08**(2006.01)i; **F16L 11/04**(2006.01)i
FI:   C08L23/06; C08L23/08; F16L11/04

According to International Patent Classification (IPC) or to both national classification and IPC

### B. FIELDS SEARCHED

Minimum documentation searched (classification system followed by classification symbols)

C08L23/06; C08L23/08; F16L11/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 2005-239750 A (MITSUI CHEMICALS, INC.) 08 September 2005 (2005-09-08) claims, examples | 1-5, 7-12 |
| A | JP 2014-043518 A (ASAHI KASEI CHEMICALS CORP.) 13 March 2014 (2014-03-13) claims, examples | 1-12 |
| A | JP 2019-023264 A (ASAHI KASEI CORP.) 14 February 2019 (2019-02-14) claims, examples | 1-12 |
| A | CN 107200898 A (SINOPEC YANGZI PETROCHEMICAL CO., LTD.) 26 September 2017 (2017-09-26) claims, examples | 1-12 |
| A | US 2021/0317290 A1 (BOREALIS AG) 14 October 2021 (2021-10-14) claims, examples | 1-12 |
| A | US 2015/0017365 A1 (DAELIM INDUSTRIAL CO., LTD.) 15 January 2015 (2015-01-15) claims, examples | 1-12 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 June 2023** | **13 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<div align="center">

**INTERNATIONAL SEARCH REPORT**

</div>

| | International application No. |
| :--- | :--- |
| | **PCT/JP2023/012436** |

**C.     DOCUMENTS CONSIDERED TO BE RELEVANT**

| Category* | Citation of document, with indication, where appropriate, of the relevant passages | Relevant to claim No. |
| :---: | :--- | :---: |
| A | JP 2007-218324 A (MITSUI CHEMICALS, INC.) 30 August 2007 (2007-08-30)<br>claims, examples | 1-12 |
| A | JP 2004-269864 A (MITSUI CHEMICALS, INC.) 30 September 2004 (2004-09-30)<br>claims, examples | 1-12 |

Form PCT/ISA/210 (second sheet) (January 2015)

**INTERNATIONAL SEARCH REPORT**
Information on patent family members

International application No.

**PCT/JP2023/012436**

| Patent document cited in search report | | | Publication date (day/month/year) | Patent family member(s) | | | Publication date (day/month/year) |
|---|---|---|---|---|---|---|---|
| JP | 2005-239750 | A | 08 September 2005 | (Family: none) | | | |
| JP | 2014-043518 | A | 13 March 2014 | (Family: none) | | | |
| JP | 2019-023264 | A | 14 February 2019 | (Family: none) | | | |
| CN | 107200898 | A | 26 September 2017 | (Family: none) | | | |
| US | 2021/0317290 | A1 | 14 October 2021 | WO | 2020/088987 | A1 | |
| | | | | EP | 3873954 | A1 | |
| | | | | CN | 112912409 | A | |
| | | | | KR | 10-2021-0082208 | A | |
| US | 2015/0017365 | A1 | 15 January 2015 | WO | 2013/147539 | A1 | |
| | | | | EP | 2832753 | A1 | |
| | | | | KR | 10-2013-0111042 | A | |
| | | | | CN | 104203996 | A | |
| JP | 2007-218324 | A | 30 August 2007 | (Family: none) | | | |
| JP | 2004-269864 | A | 30 September 2004 | US | 2006/0189775 | A1 | |
| | | | | claims, examples | | | |
| | | | | WO | 2004/083265 | A1 | |
| | | | | EP | 1595897 | A1 | |
| | | | | KR | 10-2005-0106003 | A | |
| | | | | CN | 1751072 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007218324 A
- EP 3293208 A

- JP 2003531233 A

**Non-patent literature cited in the description**

- **Z. CRUBISIC** ; **P. REMPP** ; **H. BENOIT**. *J. Polym. Sci.*, 1967, vol. B5, 753